# EUROPEAN PATENT SPECIFICATION

(11) **EP 0 780 749 B1**
(45) Date of publication and mention of the grant of the patent: **27.03.2002**
(21) Application number: 96120539.0
(22) Date of filing: 19.12.1996
(51) Int. Cl.: G05D 16/20, G05D 13/62

(54) **Method of controlling a third-to-first speed skip shift**
Verfahren zur Steuerung beim Schalten vom dritten in den ersten Gang
Méthode de commande du saut de rapport de troisième vitesse à première

(30) Priority: 21.12.1995 KR 9553496
(43) Date of publication of application: 25.06.1997
(73) Proprietor: HYUNDAI MOTOR COMPANY, Jongro-ku, Seoul 110-270 (KR)
(72) Inventor: Lee, Hee-Yong, Songpa-ku, Seoul (KR)
(74) Representative: TER MEER STEINMEISTER & PARTNER GbR

(56) References cited:
- EP-A- 0 529 777
- EP-A- 0 678 690
- WO-A-95/00354

## Description

### BACKGROUND OF THE INVENTION

### A. Field of the Invention

The present invention relates to a method of controlling a third-to-first speed skip shift, and more particularly, to a method providing an improved responsiveness to a third-to-first speed skip shift by controlling a hydraulic pressure for controlling an operation of a front clutch of an exhaust side.

### B. Description of the Prior Art

Generally, using an automatic transmission, a driver can automatically operate the transmission gear at a target transmission position by controlling a hydraulic pressure within the transmission range to be set by the running speed of a vehicle.

Therefore, the automatic transmission for a vehicle requires a minimum amount of effort on the part of the driver, removing the necessity for a driver to work a clutch pedal. Also, the automatic transmission makes driving easy since there is little possibility of an engine being stalled due to a driving mistake or an unskilled driving technique.

The conventional transmission controls a rotary power of the fluid by operating a torque converter in accordance with the output power of an engine, and feeds the hydraulic pressure to a corresponding valve according to the control signal applied in a transmission control system.

A plurality of ports are changed in accordance with the transmission lever selected by a driver, the hydraulic pressure from an oil pump is fed to the automatic transmission and the operation of hydraulic pressure valve is changed according to the hydraulic pressure. As a result, the automatic transmission controls the operation of the hydraulic pressure for controlling the operation of friction members. Then the operation of a planetary gear is variable according to the selective operation of the friction members comprising clutches and a brake, and a drive gear is operated at a set transmission ratio. The transmission ratio is fed to a first driven gear engaged a final reduction gear via a second driven gear engaged the drive gear.

When the automatic transmission can automatically change speeds in accordance with the running state of a vehicle, the necessity for reducing the shift shock generated due to the repetitive operation of the friction members to be stopped and begins to be operated arises. It is possible to minimize the shift shock by the variable duty ratio for the hydraulic pressure control solenoid valve according to the respective state of the transmission.

However, the conventional transmission does not control the hydraulic pressure for the purpose of reducing the shift shock at the third-to-first speed skip shift. Therefore, a driver using the conventional transmission in a state of the third-to-first speed skip shift faces a great shift shock since the operation of the front clutch which has been operated at a third speed is stopped thereby hydraulic pressure has been fed to the front clutch is abruptly exhausted.

EP 0 678 609 A1 is concerned with hydraulic control system of a 4-speed automatic transmission for vehicles and described the operation of the several friction elements used for realizing different speeds of the drive "D" renge. In particular, it is described which elements of the hydraulic control system have to be actuated to control the several friction elements.

In particular, a fourth-to-second skip shift operation is described with regard to the hydraulic control of the several friction elements. Thus, it is described how to operate the several friction elements to prevent shift shocks but not, how to decide whether or not fourth to second speed skip shifting has to be performed.

EP 0 529 177 A1 described a continuously variable transmission down shift control strategy to minimize slip at the drive pulley. The transmission to be controlled comprises an input V-shaped pulley and an output V-shaped pulley connected by a chain-belt. To change the transmission ratio each of the pulleys has a movable sheave so that the effective diameters of the pulleys can be continuously changed so as to continuously varying the transmission ratio. Since the transmission ratio of this transmission can be continuously changed, there exists no specific speed stage. Consequently, the speed shift control has to be performed in a way that is completely different from that of performing speed shift in an automatic transmission comprising specific speed stages as realized by a planetary gear unit.

### Summary of the invention

It is an object of the present invention to provide a method of controlling that improves responsiveness of a third-to-first speed shift.

This object is achieved by the method according to claim 1. Claim 2 describes a favorable refinement of the invention.

### BRIEF DESCRIPTION OF THE DRAWINGS

The above object and feature of the present invention will be apparent from the following description of the embodiment with reference to the accompanying drawings.

Fig. 1 is a block diagram for a control system having an improved responsiveness to a third-to-first speed skip shift according to the embodiment of the present invention.

Fig. 2 is a flow chart illustrating the method for determining whether or not the automatic transmission is in a third-to-first speed skip shift according to the embodiment of the present invention.

Fig. 3A illustrates the state of the transmission position according to the embodiment of the present invention.

Fig. 3B illustrates the pattern of the duty ratio for the hydraulic pressure according to the embodiment of the present invention.

Fig.3C illustrates the graph showing the variable rpm of an output shaft according to the embodiment of the present invention.

### DESCRIPTION OF THE PREFERRED EMBODIMENTS

Reference will now be made in detail to present the preferred embodiment of the present invention, an example of which is illustrated in the accompanying drawings.

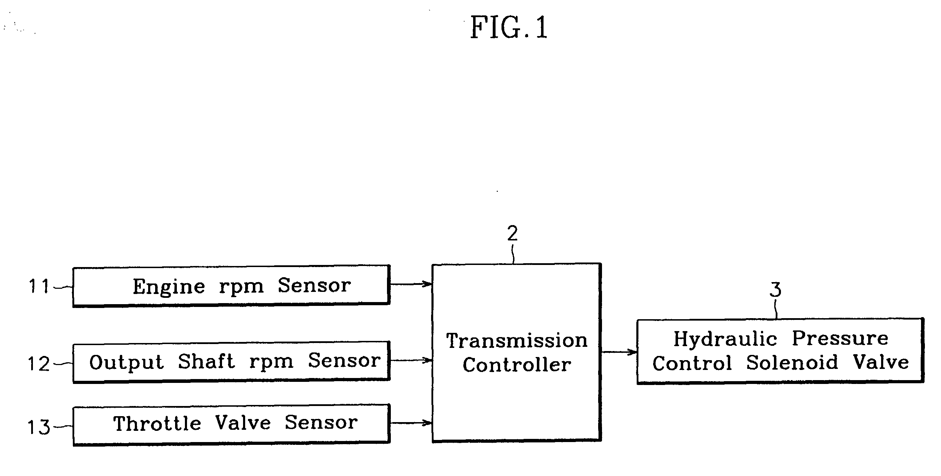

Referring to Fig. 1, present invention comprises,
a sensor for sensing the RPM of an engine 11 wherein an electrical signal is variable according to the rotational speed of the engine:
a sensor for sensing the RPM of an output shaft 12 wherein an electrical signal is variable according to the rotational speed of the output shaft;
a sensor for sensing the opening of a throttle valve 13 wherein the opening of the throttle valve is variable according to the operation of an accelerator pedal and for outputting the corresponding electrical signal and
a transmission control unit 2 for reading the output signals from the above-mentioned sensors thereby determining the state of the automatic transmission, and changing a duty ratio for controlling an operation of friction members and thereby changing the automatic transmission to be in the state of a gradual third-to-first shift if it is determined that the transmission is operated in a third-to-first speed skip shift;
a pressure control solenoid valve 3 wherein the operation is variable according to the control signal output from the transmission control unit 2.

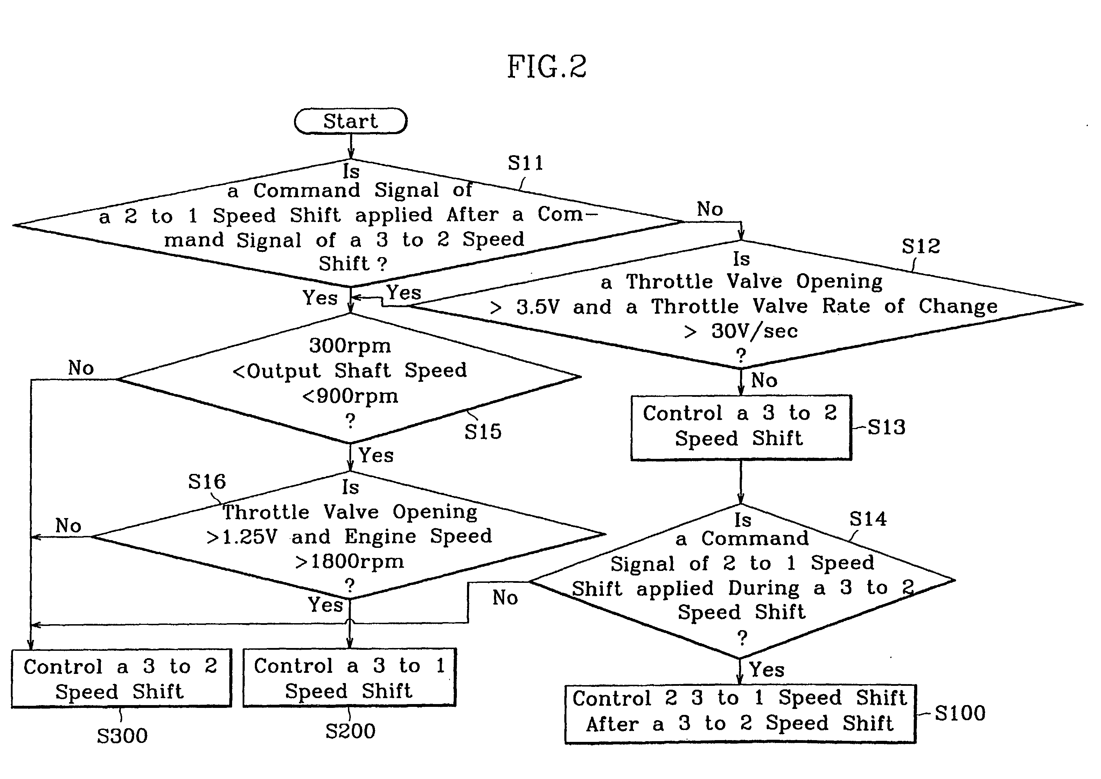

Referring to Fig. 2, the transmission control unit 2 determines whether or not the command of a second-to-first speed is applied after the command of a third-to-second speed shift S11. If the command for the second-to-first speed shift is not applied in step S11, the transmission control unit 2 determines whether a vehicle is running at an acceleration speed or at a deceleration speed.

The transmission control unit 2 controls the opening of the throttle valve by reading the output signal from the sensor for an opening of a throttle valve 13, and determines whether or not the change of the opening of a throttle valve according to time exceeds 30v/sec and the opening of the throttle checked exceeds 3.5v S12.

If the above-mentioned conditions are satisfied, the transmission control unit 2 determines that a vehicle is running at an acceleration speed after a momentary deceleration speed. The transmission control unit 2 determines whether or not a transmission is in the third-to-first speed shift.

If the above-mentioned conditions are not satisfied, the transmission control unit 2 controls the third-to-second speed shift S13 and determines whether or not the command signal for a second-to-first speed shift is applied during the operation of the third-to-second speed shift S14.

If the command signal for the second-to-first speed shift is applied, the transmission control unit 2 controls a third-to-second speed shift and then a second-to-first speed shift determining the present transmission as being in the state of a third-to-second-to-first speed shift S100.

If the command signal for the second-to-first shift is applied after the command signal for the third-to-second shift in step S11 or the rate of change of the opening of the throttle valve and the opening of the throttle valve satisfy the above-mentioned conditions in step S12, the transmission control unit 2 determines whether or not the RPM of the output shaft satisfies the conditions, 300rpm < output shaft RPM < 900rpm S15 by reading the output signal from the sensor for the number of an output shaft rotation.

If the number of the output shaft rotation exceeds the above-mentioned condition, there may no great shift shock since a vehicle is running at a high speed. Therefore, in this case, the transmission control unit 2 controls the third-to-second speed shift S300.

If the number of the rotation of the output shaft satisfies the above-mentioned condition, the transmission control unit 2 determines whether or not the opening of the throttle valve exceeds 1.25v and the number of the engine rotation exceeds 1800rpm S16 by reading the output signal from the sensor for an opening of the throttle valve 13 and the output signal from the sensor for the number of an engine rotation 11. Then, the transmission control unit 2 compares the determined number of the engine rotation and the determined opening of the throttle valve with the running conditions necessary for the third-to-first speed skip shift.

If the above-mentioned running condition is satisfied, the transmission control unit 2 determines the current transmission as being in the state of third-to-first speed skip shift and controls the duty ratio of the hydraulic pressure for stopping the front clutch in order to reduce the shift shock generated due to the skip shift S200.

If the above-mentioned running condition is not satisfied, the transmission control unit 2 controls the third-to-second shift S300.

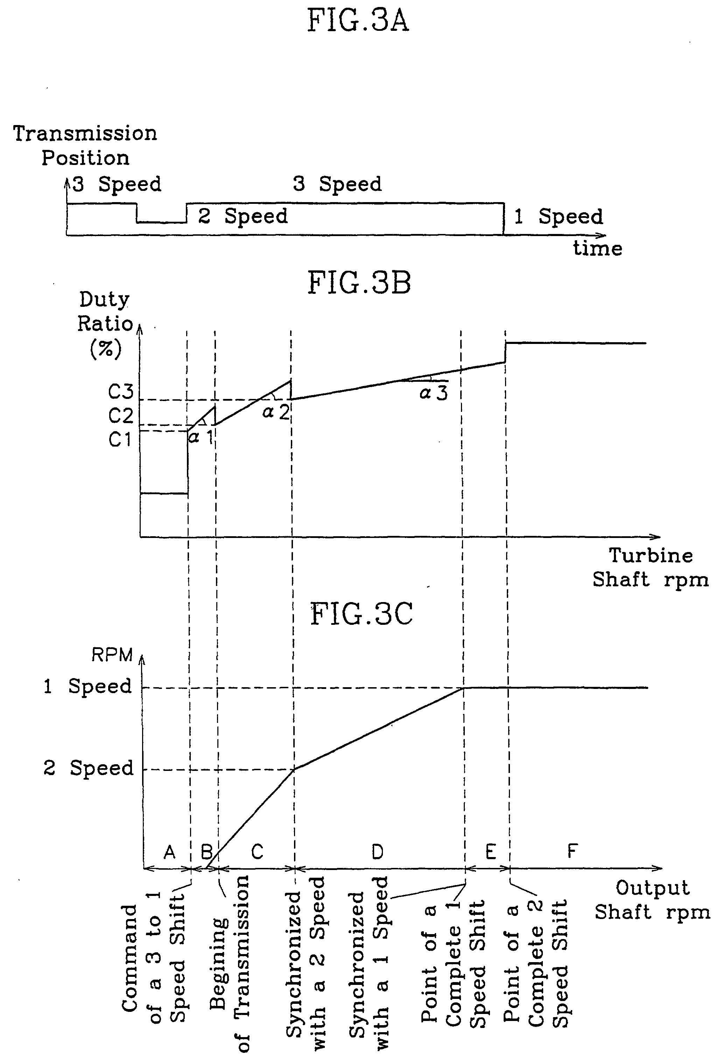

Referring to Figs. 3A - 3C, the transmission control unit 2 controls the third-to-first skip shift. When the command signal for the third-to-first speed skip shift is applied, in a "A" section, the transmission control unit 2 stops the end clutch which is operating at the third speed by controlling the transmission in the state of a second speed for a predetermined time.

The front clutch operating at a third speed is still operating due to the mechanical construction of the automatic transmission when the transmission control unit(2) is in the state of a second speed.

Then, in order to stop the operation of the front valve, the transmission control unit 2 increases the duty ratio of the control signal for controlling the operation of the hydraulic pressure control solenoid valve 3 to the point C1, and then increases the duty ratio at a gradient α1 to the point at which the transmission begins. At this time, the transmission control unit 2 controls a second-to-third speed shift.

The transmission control unit 2 increases gradually the duty ratio at a gradient α2 after decreasing the duty ratio to a point C2 in a "C" section. As a result, the hydraulic pressure control solenoid valve 3 is operated so as to change the automatic transmission in the state of a third speed to be in the state of a second speed.

When the automatic transmission gear is synchronized with the second speed via the operation of the hydraulic pressure control, the transmission control unit 2 increases gradually the duty ratio at a gradient α3 after decreasing the duty ratio to a point C3 in a "D" section, thereby the automatic transmission is operating at a first speed. The number of a turbine shaft rotation is increased to that of the first speed.

When the automatic transmission is synchronized with the first speed by controlling the operation of the hydraulic pressure control solenoid valve 3, the transmission control unit 2 increases the duty ratio at a gradient α3 for a predetermined time. As a result, a vehicle is running at the first speed.

The section in which a vehicle is running at the first speed is provided for the necessary time for changing the operation of the automatic transmission to that in the complete first speed. When the automatic transmission is in the complete first speed, the transmission control unit 2 changes the transmission position to that in the first speed.

Therefore, the present invention prevents the shift shock during the third-to-first speed skip shift from being generated due to a sudden torque conversion, allowing the automatic transmission to be in a gradual third-to-second speed shift, then a gradual second-to-first speed shift.

## Claims

1. A method of controlling third-to-first-speed shift comprising the step of:
(1) reading the output signals from a sensor (13) for detecting the opening of a throttle valve, a sensor (11) for detecting a revolution speed of an engine rotation, and a sensor (12) for detecting a revolution speed of an output shaft;
**characterized by**:
(2) determining whether or not a command signal for a second-to-first speed shift is applied after a command signal for a third-to-second speed shift (step S11);
(3) determining whether or not the revolution speed of the output shaft is greater than a first predetermined value (300 rpm) and less than a second predetermined value (900 rpm) to determine whether or not a vehicle is running at a low speed (step S15); when a second-to-first command signal is applied after a third-to-second command signal or when the throttle valve opening and its changing rate indicate that the vehicle is running at an acceleration speed after a momentary deceleration speed;
(4) determining whether or not said opening of the throttle valve exceeds a predetermined opening value (1.25 v) and said speed of the engine exceeds a predetermined engine rpm value (1800 rpm) to determine the running conditions necessary for the third-to-first speed skip shift (step S16) when the vehicle is running at a low speed;
(5) changing a duty ratio of a hydraulic pressure for controlling an operation of friction members to control third-to-first speed skip shift (step S20) when the running conditions necessary for the third-to-first speed skip shift are met; and
(6) otherwise controlling third-to-second speed shift.

2. A method according to claim 1 **characterized in that** the duty ratio of the hydraulic pressure for controlling the operation of the front clutch is increased to a point C1 and then gradually at different gradients (α1, α2, α3) until the automatic transmission is synchronised with a first speed for a predetermined time.

## Patentansprüche

1. Verfahren zum Steuern des Schaltens vom dritten in den ersten Gang, mit dem folgenden Schritt:
(1) Lesen der Ausgangssignale von einem Sensor (13) zum Erfassen des Öffnungszustands einer Drosselklappe, eines Sensors (11) zum Erfassen der Drehzahl der Motordrehung sowie eines Sensors (12) zum Erfassen der Drehzahl einer Abtriebswelle;
**gekennzeichnet durch:**
(2) Bestimmen, ob ein Befehlssignal für einen Schaltvorgang für den zweiten in den ersten Gang nach einem Befehlssignal für einen Schaltvorgang für den dritten in den zweiten Gang zugeführt wird (Schritt S11);
(3) Bestimmen, ob die Drehzahl der Abtriebswelle größer als ein erster vorbestimmter Wert (300 U/Min.) und kleiner als ein zweiter vorbestimmter Wert (900 U/Min.) ist oder nicht, um zu bestimmen, ob ein Fahrzeug mit geringer Geschwindigkeit fährt oder nicht (Schritt S15), wenn ein Befehlssignal für den zweiten in den ersten Gang nach einem Befehlssignal für den dritten in den zweiten Gang zugeführt wird oder wenn die Drosselklappenöffnung und ihre Änderungsrate anzeigen, dass das Fahrzeug nach momentan verzögerter Geschwindigkeit mit beschleunigter Geschwindigkeit fährt;
(4) Bestimmen, ob der genannte Öffnungsgrad der Drosselklappe einen vorbestimmten Öffnungswert (1,25 v) überschreitet oder nicht und die Drehzahl des Motors einen vorbestimmten Wert für die Umdrehung des Motors pro Minute (1800 U/Min.) überschreitet, um die Fahrbedingungen zu bestimmen, die für einen überspringenden Schaltvorgang vom dritten in den ersten Gang erforderlich sind (Schritt S16), wenn das Fahrzeug mit geringer Geschwindigkeit fährt;
(5) Ändern des Tastverhältnisses eines Hydraulikdrucks zum Steuern des Betriebs von Reibungselementen zum Steuern des überspringenden Schaltens vom dritten in den ersten Gang (Schritt S20), wenn die für das überspringende Schalten vom dritten in den ersten Gang erforderlichen Fahrbedingungen erfüllt sind; und
(6) andernfalls Steuern des Schaltens vom dritten in den zweiten Gang.

2. Verfahren nach Anspruch 1, **dadurch gekennzeichnet, dass** das Tastverhältnis des Hydraulikdrucks zum Steuern des Betriebs der Vorwärtskupplung auf einen Punkt C1 und dann allmählich mit verschiedenen Gradienten (α1, α2, α3) erhöht wird, bis das Automatikgetriebe für eine vorbestimmte Zeit mit einem ersten Gang synchronisiert ist.

## Revendications

1. Un procédé pour contrôler le passage du troisième rapport de transmission au premier rapport de transmission, comprenant l'étape consistant:
(1) à lire les signaux de sortie en provenance d'un capteur (13) pour mesurer l'ouverture d'un papillon des gaz, un capteur (11) pour mesurer la vitesse de rotation d'un moteur à combustion, et un capteur (12) pour mesurer la vitesse de rotation d'un arbre de sortie ;
**caractérisé par** les étapes consistant :
(2) à déterminer si un signal de commande pour un passage du deuxième rapport au premier rapport de transmission est appliqué ou non après un signal de commande pour un passage d'un troisième à un deuxième rapport de transmission (étape S11);
(3) à déterminer si oui ou non la vitesse de rotation de l'arbre de sortie est supérieure à une première valeur prédéterminée (300 t/min) et inférieure à une deuxième valeur prédéterminée (900 t/min) pour déterminer si un véhicule roule ou non à faible vitesse (étape S15); lorsqu'un signal de commande de passage du deuxième au premier rapport de transmission est appliqué après un signal de commande de passage du troisième au deuxième rapport de transmission ou lorsque le papillon des gaz est ouvert et que sa vitesse de variation d'ouverture indique que le véhicule roule à une vitesse accélérée après une vitesse momentanément décélérée ;
(4) à déterminer si oui ou non ladite ouverture du papillon des gaz dépasse une valeur d'ouverture prédéterminée (1,25 v) et ladite vitesse du moteur à combustion dépasse une vitesse de moteur à combustion en tours par minute prédéterminée (1800 t/min) pour déterminer les conditions de roulage nécessaires pour le passage par. saut du troisième au premier rapport de transmission (étape S16) lorsque le véhicule roule à vitesse réduite ;
(5) à modifier le rapport d'application d'une pression hydraulique pour contrôler le fonctionnement d'organes de friction pour contrôler le passage par saut du troisième au premier rapport de transmission (étape S20) lorsque les conditions de roulage nécessaires pour le passage par saut du troisième au premier rapport de transmission sont satisfaites ; et
(6) dans le cas contraire, à contrôler le passage du troisième au deuxième rapport de transmission.

2. Un procédé selon la revendication 1, **caractérisé en ce que** le rapport d'application de la pression hydraulique pour contrôler le fonctionnement de l'embrayage avant est augmenté jusqu'au point C1 et est ensuite augmenté progressivement selon des pentes d'augmentation différentes (α1, α2, α3) jusqu'à ce que la transmission automatique soit synchronisée sur un premier rapport de transmission pendant une durée prédéterminée.
